# FASCICULE DE BREVET EUROPEEN

(11) **EP 0 586 697 B1**
(45) Date de publication et mention de la délivrance du brevet: **11.09.1996**
(21) Numéro de dépôt: 93920550.6
(22) Date de dépôt: 18.03.1993
(51) Int. Cl.: B64F 1/22

(54) **VEHICULE DE CONVOYAGE D'AVION AU SOL**
SCHLEPPFAHRZEUG ZUM MANÖVRIEREN VON FLUGZEUGEN
VEHICULE FOR GROUND ESCORT OF AIRCRAFT

(30) Priorité: 24.03.1992 FR 9203497
(43) Date de publication de la demande: 16.03.1994
(73) Titulaire: HYDROLAND S.A., F-17000 La Rochelle-Pallice (FR)
(72) Inventeur: LE GALL, Joel-Yves, F-92350 Le Plessis-Robinson (FR); RODIER, Bernard, F-17690 Angoulins-sur-Mer (FR)
(74) Mandataire: Foldes, Georges
(86) Numéro de dépôt international: FR9300270
(87) Numéro de publication internationale: WO9318967

(56) Documents cités:
- WO-A-90/08696
- US-A- 2 798 729
- US-A- 2 980 270
- US-A- 3 119 502

## Description

L'invention se rapporte à un véhicule de convoyage d'avion au sol utilisé sur les aéroports pour déplacer les avions entre différentes zones telles que les zones d'embarquement-débarquement, les zones d'entretien et les zones de garage. Le véhicule de convoyage conforme à l'invention permet d'atteindre une vitesse de convoyage relativement élevée, de l'ordre de 30 à 40 kilomètres/heure sans exercer de contrainte dommageable sur certaines parties de l'avion, notamment le train d'atterrissage avant.

Pour déplacer les avions sur les aéroports sans mettre en route leurs propres moteurs, il est connu d'atteler un tracteur au train d'atterrissage avant de l'avion. On utilise ainsi souvent une barre articulée entre le train d'atterrissage avant et le tracteur. Un autre système, plus complexe, nécessitant un véhicule spécial, prévoit d'embarquer le train avant sur le véhicule en l'arrimant au niveau des roues. Dans tous les cas, les accélérations et décélérations du véhicule de convoyage se traduisent par des contraintes qui s'exercent directement sur le mécanisme fragile du train d'atterrissage avant. C'est pourquoi la vitesse de ces véhicules est limitée, de l'ordre de 15 kilomètres/heure pour le système à barre de liaison et de l'ordre de 30 kilomètres/heure, au plus, pour l'autre système. De plus, pour certains avions (notamment les avions à grande capacité actuels) la faiblesse du train d'atterrissage avant ne permet pas d'utiliser le type de convoyeur actuel le plus rapide.

Le document US 3 119 502 décrit un véhicule de convoyage d'avion au sol permettant de prendre en charge l'avion par ses trois trains d'atterrissage. Cependant, les trains d'atterrissage principaux, à l'arrière, doivent être tractés par câble pour prendre position dans leurs nacelles.

Le document US 2 980 270 décrit un système dans lequel les nacelles de prise en charge des trains d'atterrissage ne comportent pas de moyens de levage.

L'invention permet de résoudre tous les inconvénients mentionnés ci-dessus, c'est-à-dire d'atteindre des vitesses de convoyage élevées sans créer de contraintes sur le train d'atterrissage avant.

Plus précisément, l'invention concerne donc un véhicule de convoyage d'avion au sol, comprenant une structure roulante conformée et dimensionnée pour supporter l'ensemble de l'avion, reposant sur elle par tous ses trains d'atterrissage, caractérisée en ce que ladite structure roulante est équipée de mécanismes de verrouillage des trains d'atterrissage principaux, agencés pour venir enserrer les roues desdits trains d'atterrissage principaux reposant au sol, et des moyens de levage pour soulever l'avion avec les trains d'atterrissage principaux ainsi verrouillés de sorte que les efforts engendrés par les accélérations et décélérations du véhicule de convoyage soient supportés par lesdits trains d'atterrissage principaux.

Du fait que les efforts engendrés par les accélérations et décélérations du convoi sont repris par les trains d'atterrissage principaux, arrière, beaucoup plus robustes que le train avant, il n'est plus nécessaire de contrôler lesdites accélérations et décélérations et le convoyage peut se faire à une vitesse plus grande. Avantageusement la structure roulante précitée est de hauteur telle qu'elle puisse s'engager sous l'avion reposant sur le sol par ses propres trains d'atterrissage et elle comporte des nacelles de chargement des trains d'atterrissage principaux, équipées de mécanismes de verrouillage de ceux-ci ainsi qu'une nacelle de chargement du train d'atterrissage avant agencée et positionnée pour pouvoir supporter ledit train d'atterrissage avant. En outre, des moyens de levage de ces nacelles sont prévus pour soulever l'avion de quelques dizaines de centimètres au-dessus du sol, pendant le convoyage.

Il est à noter que le train d'atterrissage avant repose pratiquement librement sur la nacelle qui lui est affectée. Seul le mouvement vertical du train d'atterrissage avant est limité, par exemple par une sangle ou tout autre moyen d'entrave analogue propre à empêcher le cabrage de l'avion lors des accélérations du convoi. En outre, la nacelle de chargement du train d'atterrissage avant a avantageusement la forme générale d'une pelle liée à un mécanisme de déplacement vertical pour le soulèvement de l'avion et, de préférence, à un mécanisme de déplacement horizontal permettant de glisser la pelle sous le train d'atterrissage avant.

Selon une autre caractéristique préférée, les nacelles de chargement des trains d'atterrissage principaux, sont agencés pour venir enserrer les roues de ces trains d'atterrissage et des moyens de levage pneumatiques sont agencés entre une partie portant lesdites nacelles de chargement des trains d'atterrissage principaux et une partie incluant des moyens de roulement dudit véhicule.

L'invention sera mieux comprise et d'autres avantages de celle-ci apparaîtront plus clairement à la lumière de la description qui va suivre de deux modes de réalisation d'un véhicule de convoyage d'avion au sol conformes à son principe, donnée uniquement à titre d'exemple et faite en référence aux dessins annexés dans lesquels:
- la figure 1 est une vue schématique en élévation d'un premier mode de réalisation d'un véhicule de convoyage conforme à l'invention, représenté en phase de chargement d'un avion;
- la figure 2 est une vue analogue à la figure 1 pendant le convoyage de l'avion;
- la figure 3 est une vue partielle de dessus du même véhicule de convoyage;
- la figure 4 est une vue schématique en élévation d'un deuxième mode de réalisation d'un véhicule de convoyage conforme à l'invention;
- la figure 5 est une vue de dessus de ce même véhicule de convoyage;
- la figure 6 est une vue de détail en perspective illustrant une nacelle de chargement d'un train d'atterrissage principal; et
- la figure 7 est une vue de détail en perspective illustrant une modification avantageuse de la cabine de pilotage.

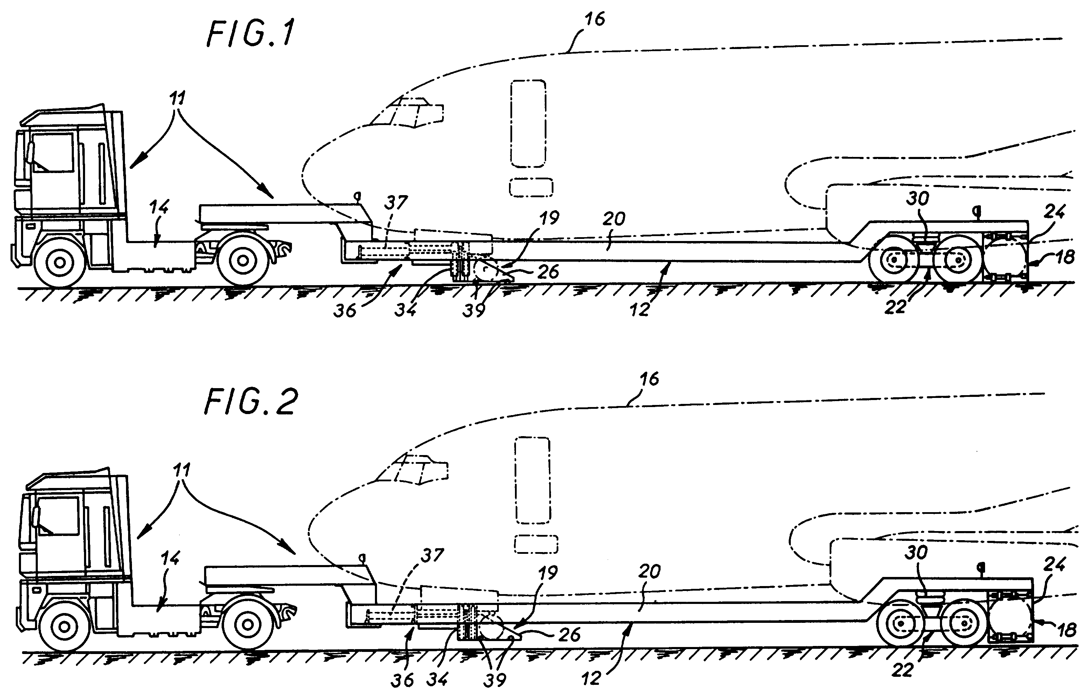

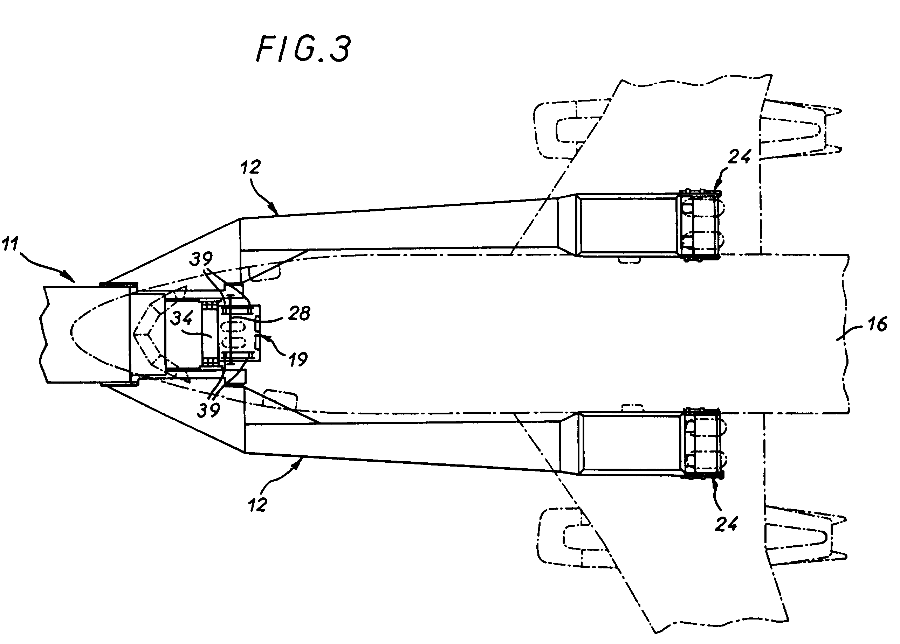

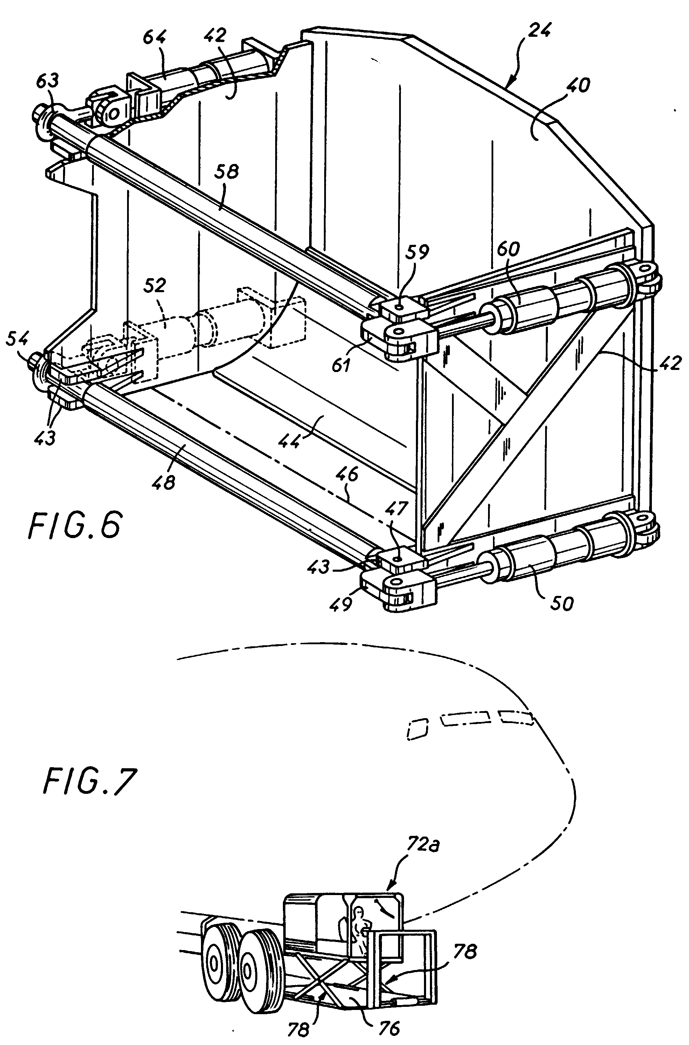

Le véhicule de convoyage au sol plus particulièrement représenté aux figures 1-3 et 6 comprend une structure roulante 11, ici plus particulièrement constituée d'une remorque 12 et d'un tracteur 14 auquel elle est attelée. Le tracteur 14 peut être un simple tracteur de camion. La structure roulante, et plus particulièrement ici la remorque 12, est conformée et dimensionnée pour supporter la totalité d'un avion 16, illustrée en trait fantôme sur les dessins, reposant sur elle par tous ses trains d'atterrissage, à savoir deux trains d'atterrissage principaux 18, arrière et un train d'atterrissage avant 19. Plus précisément, la structure roulante comprend un châssis 20 allongé et très bas et deux trains de roulement 22 à l'arrière dudit châssis. L'ensemble est ainsi susceptible d'être engagé sous l'avion 16 reposant au sol par ses propres trains d'atterrissage 18, 19. Le châssis 20 a ici la forme d'un V (vu de dessus, figure 3); il est attelé par sa pointe au tracteur 14. Les deux trains de roulement 22 sont respectivement agencés aux extrémités de ses branches. De ce fait, les trains de roulement 22 sont situés à proximité des emplacements prévus pour recevoir les trains d'atterrissage principaux 18. Plus précisément, chaque extrémité de branche du châssis 20 comporte une nacelle de chargement 24 d'un train d'atterrissage principal 18, laquelle est équipée d'un mécanisme de verrouillage de ce train d'atterrissage. Cet agencement particulier sera décrit en détail en référence à la figure 6. De cette façon, les efforts engendrés par les accélérations et décélérations du convoi sont supportés intégralement par les trains d'atterrissage principaux 18, largement dimensionnés pour cela, ce qui n'est généralement pas le cas du train d'atterrissage avant 19. Ce même châssis 20 porte aussi une nacelle de chargement 26 du train d'atterrissage avant 19. Elle est agencée et positionnée au voisinage de la pointe du châssis pour pouvoir supporter le train d'atterrissage 19. Contrairement aux trains d'atterrissage principaux 18, le train d'atterrissage avant 19 n'est que posé sur la nacelle 26 et laissé libre sur celle-ci tant longitudinalement que transversalement. Il est simplement retenu verticalement par un moyen d'entrave 28 (tel que par exemple une sangle) prévu au voisinage de la nacelle 26. Une telle sangle peut être attachée entre le châssis et la jambe du train d'atterrissage avant pour limiter son mouvement vertical par rapport à la nacelle. On évite ainsi le cabrage de l'avion lors des accélérations du convoi.

Le véhicule est en outre équipé de moyens de levage des nacelles 24 et 26, ce qui permet de soulever l'avion tout entier. En effet, les nacelles 24 et 26 peuvent s'abaisser, ce qui permet le chargement de l'avion par engagement des trains d'atterrissage dans leurs nacelles respectives. L'élévation des nacelles entraîne le soulèvement de l'avion à quelques dizaines de centimètres au-dessus du sol, ce qui permet de le déplacer.

Pour ce qui concerne plus particulièrement le soulèvement des nacelles 24, la structure roulante comporte des moyens de levage pneumatiques 30 intercalés entre la partie portant lesdites nacelles, (c'est-à-dire en fait le châssis 20) et les trains de roulement 22. Ces moyens de levage pneumatiques sont en quelque sorte combinés à un système de suspension pneumatique gonflable agencé au-dessus de chaque train de roues du véhicule. Par mesure de sécurité, la suspension peut être verrouillée mécaniquement en position haute, pendant le convoyage.

Par ailleurs, la nacelle de chargement 26 du train d'atterrissage avant 19 a la forme générale d'une pelle, laquelle est liée à un mécanisme de déplacement vertical 34 actionné par des vérins. L'action conjointe des moyens de levage 30 et du mécanisme 34 assure le soulèvement de l'avion dès lors que les trains d'atterrissage de celui-ci ont pris place dans les nacelles. La nacelle de chargement 26 et le mécanisme 34 forment un sous-ensemble qui est lui-même lié à un mécanisme de déplacement horizontal 36 par lequel il peut être déplacé d'avant en arrière, ici sous l'action de vérins 37. La base de la nacelle 26 est munie de galets de roulement 39 par lesquels elle repose sur le sol lorsqu'elle est en position abaissée. Dans cette position, la base de la nacelle se trouve à quelques centimètres seulement au-dessus du sol. Tous ces moyens coopèrent, comme on le verra plus loin, pour introduire la nacelle de chargement 26 sous le train d'atterrissage avant 19, sans déplacement de l'avion.

On va maintenant décrire, en référence à la figure 6, la structure de l'une des nacelles de chargement 24 d'un train d'atterrissage principal 18. Elle comporte une paroi transversale verticale 40 à laquelle sont fixés deux flasques latéraux 42 renforcés, parallèles entre eux. A la base de la nacelle, fixée entre la paroi transversale 40 et les flasques 42, se trouve un socle d'appui 44 contre lequel les roues du train d'atterrissage peuvent venir s'appliquer. La face supérieure de ce socle est avantageusement concave (à surface cylindrique). Il peut ainsi s'engager sous les roues du train d'atterrissage jusqu'à la limite de leur appui au sol, tout en épousant les bandes de roulement des pneus sur une surface relativement importante. Sur la figure 6, la ligne en trait fantôme 46 représente la ligne d'appui au sol de ces roues. Il s'agit plus exactement d'une ligne fictive passant approximativement par les centres des zones d'appui desdites roues du train d'atterrissage lorsque celui-ci est correctement positionné dans la nacelle abaissée au sol. Une barre d'appui 48 est également installée à la partie inférieure de la nacelle. Elle est mobile et articulée à l'un des flasques 42. En position normale, elle vient se placer parallèlement au socle 44, sous les roues du train d'atterrissage et de l'autre côté de la ligne d'appui au sol 46 par rapport au socle 44. Dans cette position, la barre est maintenue à ses extrémités dans des logements découpés dans les flasques 42 et renforcés par des supports transversaux 43 soudés. D'un côté de la nacelle, ces supports 43 forment une chape portant un axe vertical 47. L'extrémité correspondante de la barre 48 est articulée à cet axe et est munie d'un prolongement 49 formant levier, lui-même articulé par une chape à l'extrémité de la tige d'un vérin 50 monté le long du côté horizontal inférieur du flasque. Un vérin semblable 52 est monté le long du côté horizontal inférieur de l'autre flasque 42 mais son extrémité porte un crochet de verrouillage 54 susceptible de coopérer avec l'extrémité correspondante de la barre d'appui 48, pour la maintenir dans son logement découpé dans le flasque 42. Ainsi, il apparaît clairement que l'actionnement du vérin 50 provoque le pivotement de la barre 48 qui peut se placer parallèlement au flasque 42 pour permettre l'entrée ou la sortie du train d'atterrissage dans l'espace limité par la paroi 40 et les flasques 42 ou, au contraire, se placer et se verrouiller perpendiculairement aux deux flasques dans une position telle qu'elle se trouve engagée sous les roues. Il apparaît donc clairement que, dans une telle position, le soulèvement de la nacelle 24 entraîne le train d'atterrissage qui s'y trouve engagé.

Un montage analogue est adopté pour une barre de retenue 58, mobile, venant se placer parallèlement et au-dessus de la barre d'appui 48, surmontant les roues du train d'atterrissage. Brièvement, la barre 58 est montée articulée à l'une de ses extrémités autour d'un axe vertical 59 et elle est actionnée en pivotement via un levier 61 par un vérin 60 monté le long d'un flasque 42. De l'autre côté, l'extrémité de la barre 58 coopère avec un crochet de verrouillage 63 articulé à l'extrémité de la tige d'un vérin 64 monté le long de l'autre flasque 42. Le rôle de cette barre 58 est d'éviter que le train d'atterrissage se dégage accidentellement de la nacelle 24 pendant le convoyage. En d'autres termes, la nacelle 24 comporte un mécanisme de verrouillage du train d'atterrissage principal correspondant, ce mécanisme comprenant principalement le socle 44, les barres 48 et 58 et leurs vérins associés.

Dans le mode de réalisation des figures 1 à 3, les nacelles de chargement des trains d'atterrissage s'ouvrent vers l'arrière. On entend par là que les deux nacelles 24 sont fixées au châssis 20 de telle façon que leurs côtés matérialisés par les barres 48 et 58 soient disposés à l'arrière tandis que le bord transversal libre inférieur de la nacelle 26 formant pelle constitue aussi le bord arrière de cette nacelle. Il en résulte que le chargement de l'avion sur le véhicule de convoyage qui vient d'être décrit s'effectue en manoeuvrant ce dernier en marche arrière sous l'avion. Les opérations sont les suivantes.

La remorque est engagée par l'avant et à reculons, sous l'avion. Les nacelles 24 et 26 sont en position haute. Les nacelles 24 sont ouvertes, c'est-à-dire que les barres 48 et 58 sont maintenues parallèlement au flasque 42 par les vérins 50 et 60. La nacelle 26 est avancée au maximum vers l'avant de la remorque. Lorsque les deux nacelles 24 sont à proximité des trains d'atterrissage 18 correspondants, la partie arrière du châssis 20 est abaissée (dépressurisation des moyens de levage 30) jusqu'à ce que les socles 44 soient à quelques centimètres au-dessus du sol. La remorque est reculée jusqu'à ce que les trains d'atterrissage s'engagent dans les nacelles 24 correspondantes. Enfin, les barres 48 et 58 sont actionnées en pivotement et verrouillées dans la position illustrée à la figure 6. La nacelle 26 est abaissée au niveau du sol et le mécanisme de déplacement horizontal 36 est actionné jusqu'à ce que la base de la nacelle 26 en forme de pelle s'engage sous le train d'atterrissage avant 19. Puis l'actionnement des moyens de levage 30 et des vérins du mécanisme de déplacement vertical 34 provoque le soulèvement de l'avion. Après entravement du train d'atterrissage avant, l'avion peut être déplacé jusqu'à un autre endroit où le déchargement est effectué par les opérations inverses de celles indiquées ci-dessus.

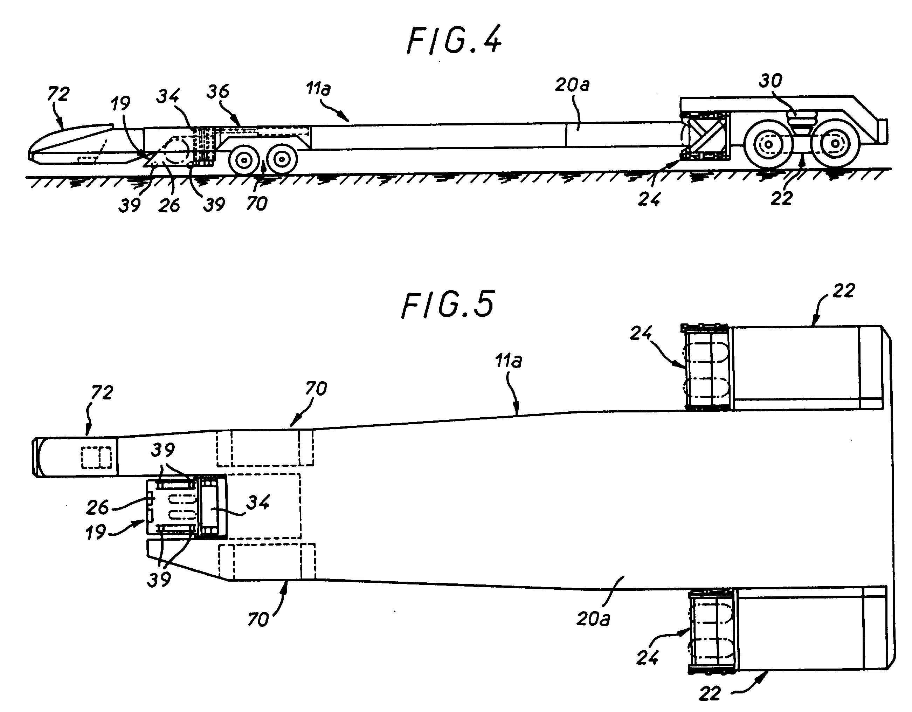

Sur les figures 4 et 5, on a représenté un autre mode de réalisation d'un véhicule conforme à l'invention, dans une version automotrice. Sur ces dessins, les sous-ensembles analogues à ceux des figures 1 à 3 et 6 portent les mêmes références numériques et ne seront pas décrits à nouveau en détail. La structure roulante 11a comporte un châssis 20a (cette fois en forme générale de T, vu de dessus) équipé de deux trains de roues 22 situés à l'arrière. Deux nacelles de chargement 24 des trains d'atterrissage principaux de l'avion sont respectivement situées au voisinage de ces trains de roues 22. Des moyens de levage pneumatiques 30 sont également intercalés entre les trains de roues 22 et le châssis 20a.

Cependant, les nacelles de chargement 24 sont agencées et disposées pour s'ouvrir vers l'avant, tout comme la nacelle de chargement du train d'atterrissage avant 26 située à l'avant du châssis 20. Le mécanisme de déplacement horizontal 36 de cette nacelle est retourné de 180° par rapport au mode de réalisation précédent. Deux trains de roues directrices 70 sont prévus au voisinage de la nacelle 26, de part et d'autre de celle-ci. Bien entendu, une motorisation (non représentée) est intégrée au châssis 20 et mécaniquement couplée aux trains de roues 22. Le véhicule est complété par une cabine de pilotage 72, située à l'avant et déportée sur le côté. Les emplacements des roues des trains d'atterrissage dans leurs nacelles respectives sont indiqués en trait fantôme.

L'architecture générale de cette version automotrice permet une manoeuvre de chargement plus facile, le véhicule se déplaçant en marche avant et approchant par l'arrière de l'avion. Les manoeuvres d'accostage et de verrouillage sont les mêmes mais, une fois l'avion chargé, la structure roulante 11a est entièrement située sous l'avion. Par conséquent, l'attelage dans son ensemble est moins encombrant et plus maniable, bénéficiant d'un rayon de braquage plus court. Il en résulte une plus grande souplesse d'utilisation sur les aéroports.

De plus, comme le montre la figure 7, la cabine de pilotage 72a peut être montée mobile verticalement par rapport à une plate-forme 76 du châssis. Dans l'exemple, la cabine 72a a la forme d'un parallélépipède rectangle et est montée sur un système de leviers 78, ici en X. Les moyens d'actionnement par vérins de ce système de leviers, ne sont pas visibles sur le dessin. Grâce à cet agencement, la cabine peut être surélevée pour améliorer la visibilité du conducteur pendant le transport de l'avion.

## Revendications

1. Véhicule de convoyage d'avion au sol, comprenant une structure roulante (11, 11a) conformée et dimensionnée pour supporter l'ensemble de l'avion (16), reposant sur elle par tous ses trains d'atterrissage (18,19), caractérisée en ce que ladite structure roulante est équipée de mécanismes de verrouillage (44,48,58) des trains d'atterrissage principaux (18) , agencés pour venir enserrer les roues desdits trains d'atterrissage principaux reposant au sol, et des moyens de levage (30,34) pour soulever l'avion avec les trains d'atterrissage principaux ainsi verrouillés de sorte que les efforts engendrés par les accélérations et décélérations du véhicule de convoyage soient supportés par lesdits trains d'atterrissage principaux.

2. Véhicule selon la revendication 1, caractérisé en ce que ladite structure roulante (11, 11a) est de hauteur telle qu'elle puisse s'engager sous l'avion reposant sur le sol par ses propres trains d'atterrissage, en ce qu'elle comporte des nacelles de chargement (24) des trains d'atterrissage principaux positionnées pour venir se placer respectivement au voisinage de ceux-ci, ces nacelles de chargement des trains d'atterrissage principaux étant équipées de mécanismes de verrouillage précités et en ce qu'elle comporte en outre une nacelle de chargement (26) du train d'atterrissage avant agencée et positionnée pour pouvoir supporter ledit train d'atterrissage avant, ainsi que des moyens de levage (30, 34) desdites nacelles.

3. Véhicule selon la revendication 2, caractérisé en ce que ladite structure roulante comporte des moyens de levage pneumatique (30) agencés entre une partie (20, 20a) portant lesdites nacelles de chargement desdits trains d'atterrissage principaux et des trains de roulement (22) dudit véhicule.

4. Véhicule selon la revendication 2 ou 3, caractérisé en ce que chaque nacelle de chargement (24) d'un train d'atterrissage principal comporte un socle d'appui (44) contre lequel les roues dudit train d'atterrissage viennent s'appliquer et au moins une barre d'appui (48), mobile venant se placer parallèlement audit socle, sous les roues dudit train d'atterrissage et de l'autre côté de leur ligne d'appui au sol (46) par rapport audit socle.

5. Véhicule selon la revendication 4, caractérisé en ce que chaque nacelle de chargement de train d'atterrissage principal comporte au moins une barre de retenue (58), mobile venant se placer parallèlement et au-dessus de ladite barre d'appui (48), au-dessus des roues du train d'atterrissage.

6. Véhicule selon l'une des revendications 2 à 5, caractérisé en ce que ladite nacelle de chargement (26) du train d'atterrissage avant a la forme générale d'une pelle et en ce qu'elle est liée à un mécanisme de déplacement vertical (34), par exemple actionné par vérin.

7. Véhicule selon la revendication 6, caractérisé en ce que ladite nacelle de chargement (26) du train d'atterrissage avant est liée à un mécanisme de déplacement horizontal (36), par exemple actionné par vérin.

8. Véhicule selon l'une des revendications 6 ou 7, caractérisé en ce qu'un moyen d'entrave (28) ou analogue est prévu au voisinage de ladite nacelle de chargement (26) du train d'atterrissage avant pour limiter ses mouvements verticaux par rapport à la nacelle.

9. Véhicule selon l'une des revendications 7 ou 8, caractérisé en ce que ladite nacelle de chargement du train d'atterrissage avant comporte une base munie de galets de roulement (39).

10. Véhicule selon l'une des revendications précédentes, caractérisé en ce que ladite structure roulante (11) comporte une remorque (12) et en ce que cette dernière est attelée à un tracteur indépendant (14), connu en soi.

11. Véhicule selon l'une des revendications 1 à 9, caractérisé en ce que ladite structure roulante (11a) est automotrice.

12. Véhicule selon l'une des revendications 2 à 9, caractérisé en ce que ladite structure roulante (11a) est automotrice et en ce qu'elle comporte au moins un train de roues (22) motrices, situé au voisinage des nacelles de chargement des trains d'atterrissage principaux et au moins un train de roues directrices (70) situé au voisinage de la nacelle de chargement du train d'atterrissage avant.

13. Véhicule selon la revendication 12, caractérisé en ce que les nacelles de chargement des trains d'atterrissage s'ouvrent vers l'avant.

14. Véhicule selon l'une des revendications 11 ou 12, caractérisé en ce qu'il comporte une cabine de pilotage (72a) montée mobile verticalement par rapport à ladite structure roulante.

## Patentansprüche

1. Bodentransportfahrzeug für Flugzeuge, umfassend eine Fahrstruktur (11, 11a), die für die Auflage des gesamten Flugzeugs (16) ausgelegt und bemessen ist, das auf dieser mit dem gesamten Fahrgestell (18, 19) aufliegt, dadurch gekennzeichnet, daß die Fahrstruktur mit Arretierungseinrichtungen (44, 48, 52) für die Hauptfahrwerke (18) ausgestattet ist, die so angeordnet sind, daß sie die am Boden aufliegenden Räder der Hauptfahrwerke einspannen, und mit Hebemitteln (30, 24), um das Flugzeug mit den auf diese Weise arretierten Hauptfahrwerken so anzuheben, daß die vom Transportfahrzeug erzeugten Beschleunigungs- und Bremskräfte von den Hauptfahrwerken getragen werden.

2. Fahrzeug nach Anspruch 1, dadurch gekennzeichnet, daß die Fahrstruktur (11, 11a) so hoch ist, daß sie unter das am Boden auf dem Fahrgestell ruhende Flugzeug gefahren werden kann, dadurch, daß sie Ladebühnen (24) für die Hauptfahrwerke umfaßt, die so angeordnet sind, daß sie jeweils neben diesen positioniert werden, wobei diese Ladebühnen für die Hauptfahrwerke mit den vorgenannten Arretierungseinrichtungen ausgestattet sind, und dadurch, daß sie des weiteren eine Ladebühne (26) für das Bugfahrwerk umfaßt, die so angeordnet und positioniert ist, daß das Bugfahrwerk unterstützt werden kann, sowie Hebemittel (30, 34) für die Ladebühnen.

3. Fahrzeug nach Anspruch 2, dadurch gekennzeichnet, daß die Fahrstruktur pneumatische Hebemittel (30) umfaßt, die zwischen einem Teil (20, 20a), der die Ladebühnen der Hauptfahrwerke trägt, und dem Laufwerk (22) des Fahrzeugs angeordnet sind.

4. Fahrzeug nach Anspruch 2 oder 3, dadurch gekennzeichnet, daß jede Ladebühne (24) eines Hauptfahrwerks einen Stützsockel (44) umfaßt, an dem die Räder des Fahrgestells anliegen, und mindestens eine bewegliche Stützstange (48), die parallel zum Sockel unter den Rädern des Fahrgestells und auf der anderen Seite entlang deren Auflagelinie auf dem Boden (46) in bezug auf den Sockel angeordnet ist.

5. Fahrzeug nach Anspruch 4, dadurch gekennzeichnet, daß jede Ladebühne für das Hauptfahrwerk mindestens eine bewegliche Haltestange (58) umfaßt, die parallel und oberhalb der Stützstange (48) über den Rädern des Fahrgestells angeordnet ist.

6. Fahrzeug nach einem der Ansprüche 2 bis 5, dadurch gekennzeichnet, daß die Ladebühne (26) des Bugfahrwerks die Form einer Schaufel aufweist, und dadurch, daß sie mit einer Einrichtung zur vertikalen Bewegung (34) verbunden ist, die beispielsweise über Zylinder in Bewegung gesetzt wird.

7. Fahrzeug nach Anspruch 6, dadurch gekennzeichnet, daß die Ladebühne (26) des Bugfahrwerks mit einer Einrichtung zur horizontalen Bewegung (36) verbunden ist, die beispielsweise über Zylinder in Bewegung gesetzt wird.

8. Fahrzeug nach einem der Ansprüche 6 oder 7, dadurch gekennzeichnet, daß eine Hemmeinrichtung (28) oder entsprechendes in der Nähe der Ladebühne (26) für das Bugfahrwerk vorgesehen ist, um dessen vertikale Bewegungen in bezug auf die Ladebühne einzuschränken.

9. Fahrzeug nach einem der Ansprüche 7 oder 8, dadurch gekennzeichnet, daß die Ladebühne des Bugfahrwerks einen mit Transportrollen (39) ausgestatteten Sockel umfaßt.

10. Fahrzeug nach einem der vorhergehenden Ansprüche, dadurch gekennzeichnet, daß die Fahrstruktur (11) ein Anhängefahrzeug (12) umfaßt, und dadurch, daß dieses an ein unabhängiges, an sich bekanntes Zugfahrzeug (14) angekuppelt ist.

11. Fahrzeug nach einem der Ansprüche 1 bis 9, dadurch gekennzeichnet, daß die Fahrstruktur (11a) selbstfahrend ist.

12. Fahrzeug nach einem der Ansprüche 2 bis 9, dadurch gekennzeichnet, daß die Fahrstruktur (11a) selbstfahrend ist, und dadurch, daß sie mindestens einen Antriebsradsatz (22) umfaßt, der in der Nähe der Ladebühnen für die Hauptfahrwerke positioniert ist, und mindestens einen Leitradsatz (70), der sich in der Nähe der Ladebühne für das Bugfahrwerk befindet.

13. Fahrzeug nach Anspruch 12, dadurch gekennzeichnet, daß sich die Ladebühnen für das Fahrwerk nach vorne hin öffnen.

14. Fahrzeug nach einem der Ansprüche 11 oder 12, dadurch gekennzeichnet, daß es eine Fahrerkabine (72a) umfaßt, die in bezug auf die Fahrstruktur vertikal beweglich montiert ist.

## Claims

1. A vehicle for conveying aircraft on the ground, comprising a rolling structure (11,11a) of a configuration and dimensions to support the entire aircraft (16) resting thereon by all its landing gear (18,19), characterised in that said rolling structure is provided with locking mechanisms (44,48,58) for the main landing gear, arranged to enclose the wheels of said landing gear resting on the ground, and lifting means (30,34) for raising the aircraft with the main landing gear locked in this way so that the loads generated by the accelerations and decelerations of the conveyed vehicle are borne by said main landing gear.

2. A vehicle according to claim 1, characterised in that said rolling structure (11,11a) is of such a height that it can be engaged under the aircraft resting on the ground by its own landing gear, in that it comprises loading cradles (24) for the main landing gear, which are arranged so as to be placed respectively in the vicinity of the latter, said loading cradles for the main landing gear being provided with said locking mechanisms, and it also comprises a loading cradle (26) for the forward landing gear arranged and positioned so as to be able to support said forward landing gear, and also lifting means (30,34) for said cradles.

3. A vehicle according to claim 2, characterised in that said rolling structure comprises pneumatic lifting means (30) arranged between a part (20,20a) carrying said loading cradles for the main landing gear and the undercarriages (22) of said vehicle.

4. A vehicle according to claim 2 or claim 3, characterised in that each loading cradle (24) of a main landing gear comprises a support base (44) against which the wheels of said landing gear are applied, and at least one movable support rod (48) which is disposed parallel to said base below the wheels of said landing gear and on the other side of their contact line on the ground (46) in relation to said base.

5. A vehicle according to claim 4, characterised in that each loading cradle of the main landing gear comprises at least one movable retaining rod (58) which is disposed parallel to and above said support rod (48), above the wheels of the landing gear.

6. A vehicle according to any one of claims 2 to 5, characterised in that said loading cradle (26) of the forward landing gear is generally in the shape of a shovel, and in that it is connected to a vertical displacement mechanism (34), for example operated by actuator(s).

7. A vehicle according to claim 6, characterised in that said loading cradle (26) of the forward landing gear is connected to a horizontal displacement mechanism (36), for example operated by actuator(s).

8. A vehicle according to either claim 6 or claim 7, characterised in that a restraining means (28) or the like is provided in the vicinity of said loading cradle (26) of the front landing gear so as to limit its vertical movement in relation to the cradle.

9. A vehicle according to either claim 7 or claim 8, characterised in that said loading cradle of the forward landing gear comprises a base provided with rollers (39).

10. A vehicle according to any one of the preceding claims, characterised in that said rolling structure (11) comprises a trailer (12), and in that the latter is coupled to a per se known self-contained tractor (14).

11. A vehicle according to any one of claims 1 to 9, characterised in that said rolling structure (11a) is self-propelled.

12. A vehicle according to any one of claims 2 to 9, characterised in that said rolling structure (11a) is self-propelled, and in that it comprises at least one set of drive wheels (22) arranged in the vicinity of the loading cradles of the main landing gear and at least one set of steering wheels (70) arranged in the vicinity of the loading cradle of the forward landing gear.

13. A vehicle according to claim 12, characterised in that the loading cradles of the landing gear are open towards the front.

14. A vehicle according to either claim 11 or claim 12, characterised in that it comprises a control cab (72a) mounted vertically movably in relation to said rolling structure.
